# EUROPÄISCHE PATENTSCHRIFT

(11) **EP 0 556 222 B1**
(45) Veröffentlichungstag und Bekanntmachung des Hinweises auf die Patenterteilung: **28.12.1994**
(21) Anmeldenummer: 91918749.2
(22) Anmeldetag: 30.10.1991
(51) Int. Cl.: B01J 2/08, C01B 13/34

(54) **VERFAHREN ZUR HERSTELLUNG VON ALUMINIUMOXIDKUGELN**
PROCESS FOR PRODUCING ALUMINIUM OXIDE BEADS
PROCEDE DE PRODUCTION DE BILLES D'ALUMINE

(30) Priorität: 05.11.1990 DE 4035089; 05.11.1990 DE 4042594
(43) Veröffentlichungstag der Anmeldung: 25.08.1993
(73) Patentinhaber: Nukem GmbH, D-63754 Alzenau (DE)
(72) Erfinder: KADNER, Martin, D-6457 Maintal (DE); BRANDAU, Egbert, D-8755 Alzenau (DE); HUSCHKA, Hans, D-6450 Hanau 1 (DE)
(74) Vertreter: Stoffregen, Hans-Herbert, Dr. Dipl.-Phys.
(86) Internationale Anmeldenummer: EP9102057
(87) Internationale Veröffentlichungsnummer: WO9207653

(56) Entgegenhaltungen:
- DE-A- 1 803 724
- DE-A- 2 942 768
- FR-A- 2 135 598
- FR-A- 2 387 076
- US-A- 4 190 622
- US-A- 4 198 318

## Beschreibung

Die Erfindung bezieht sich auf ein Verfahren zur Herstellung von Aluminiumoxidkugeln, wobei man ein saures Aluminiumoxidsol oder eine saure Aluminiumoxidsuspension einer Viskosität von 10 bis 500 mPa.s herstellt und in Tröpfchen umwandelt, diese in einer wässrigen Ammoniaklösung koaguliert und anschließend die gebildeten Gelkügelchen altert, wäscht, trocknet und kalziniert. Aluminiumoxidkugeln können z. B. als Adsorbentien in der Chromatographie oder als Katalysatoren oder als Katalysatorenträger verwendet werden.

Beim Einsatz im Festbett bietet die Kugelform des Katalysators die Möglichkeit, eine sehr gleichmäßige Packung des Katalysators im Reaktor zu erzielen. Darüber hinaus zeigen kugelförmige Träger eine geringe Neigung zur Ausbildung von unerwünschten Kanälen. In einem sich bewegenden Katalysatorbett (Bewegtbett) wirkt sich die gute Fließfähigkeit runder Partikel ebenfalls vorteilhaft aus.

Aus der FR-A-2 387 076 ist ein Verfahren zur Herstellung von Mikrokugeln in Form von Uranoxid bekannt. Die Bildung von Tropfen, die seitlich von Ammoniakgas angeblasen werden, erfolgt mittels einer in Vibration versetzten Düsenplatte. Die Durchmesser der Mikrokugeln betragen in etwa 80 µm.

Ein bekanntes Verfahren zur Herstellung von Aluminiumoxidkugeln beschreibt die US-A 2,620,314, bei der aus Aluminiumspänen, Aluminiumtrichlorid und Wasser ein Hydrosol, das mit einer wässrigen Hexamethylentetramin-Lösung versetzt und in ein heißes Ölbad eingetropft wird, hergestellt wird. Die Gelkügelchen werden in heißem Öl mindestens 10 h gealtert, anschließend gewaschen, getrocknet und kalziniert.

Weitere bekannte Verfahren, die auf diesem Prinzip der Verfestigung von Aluminiumoxid-Hydrosolen in mit heißem Öl gefüllten Formsäulen basieren, werden in US-A 2 774 743, US-A 3 096 295, US-A 3 600 129, US-A 3 714 071, US-A 3 887 492, US-A 3 919 117, US-A 3 943 070, US-A 3 972 990, US-A 3 979 334, US-A 4 250 058, DE-C 27 42 709, DE-C 29 42 768 und DE-C 29 43 599 beschrieben.

In der US-A 4 116 882 wird ein Verfahren beschrieben, bei dem ein Aluminiumoxidfilterkuchen, der durch Hydrolyse aus Aluminiunalkoxiden erhalten wurde, mit Hilfe einer verdünnten Säure peptisiert und die resultierende Aufschlämmung in eine Formsäule eingetropft wird, in der die obere Phase aus Naphtha und die untere Phase aus einer 10%igen Ammoniak-Lösung bestellt. Um die Oberflächenspannung zwischen der Kohlenwasserstoff- und der wässrigen Phase herabzusetzen, wird der Ammoniaklösung ein nichtionisches, obeflächenaktives Mittel zugesetzt. Die Gelkugeln werden in wässrigem Ammoniak gealtert, getrocknet und kalziniert.

Aus der DE-A 28 12 875 ist ein Verfahren bekannt, bei den, zunächst aus einem mikrokristallinen Böhmit-Pseudoböhmit-Zwischenform-ProduktunterZusatzeinerSäure ein Slurry gebildet wird.

Dieser wird dann in eine Kohlenwasserstoff/Ammoniaklösung-Formsäule eingetropft und die erhaltenen Gelkügelchen getrocknet und kalziniert. Die Formkörper haben eine spezifische Oberfläche von 90 m²/g bis 120 m²/g und eine Schüttdichte von 0,42 g/cm³ bis 0,51 g/cm³.

Die DE-C 32 12 249 beschreibt ein Verfahren zur Herstellung von kugelförmigem Aluminiumoxid, bei dem durch Dispergieren eines Gemisches aus Böhmit und Pseudoböhmit in einer wässrigen Säure in Gegenwat von Harnstoff ein stabiles Hydrosol erhalten wird. Dieses Sol wird anschließend durch Eintropfen in eine Kohlenwasserstoff/Ammoniaklösung-Formsäule verformt. Auch hier wird der Ammoniaklösung ein oberflächenaktives Mittel zugesetzt. Weiterhin wird die Möglichkeit aufgezeigt, durch Solzusätze in Form von Kohlenwasserstoffen und geeigneten Emulgatoren wesentliche Kugeleigenschaften wie Porosität, Schüttdichte und Bruchfestigkeit zu beeinflussen.

Die DE-A 33 46 044 beschreibt ein Verfahren zur Trägerherstellung auf Aluminiumoxid-Basis, bei dem durch Einrühren von Böhmit in eine wässrige Säure unter Zusatz von einem durch Temperung aus Böhmit erhaltenen Aluminiumoxid zunächst eine Suspension oder wässrige Dispersion erzeugt wird. Diese wird anschließend mit einer organischen Phase und einem Emulgator vermischt und die entstandene Emulsion (Typ "Öl in Wasser") in der bekannten Weise in einer zweiphasigen Kolonne verformt. Über die Gewichtsanteile an eingesetztem Kohlenwasserstoff und kalziniertem Aluminiumoxid im Sol lassen sich Porenvolumen und Schüttdichte innerhalb gewisser Grenzen einstellen.

Die US-A 3 558 508 beschreibt ein Verfahren zur Herstellung von Aluminiumoxidkugeln, indem eine saure Dispersion von Aluminiumoxidhydrat in eine Formsäule gefüllt und mit einem Gemisch aus Mineralöl und Tetrchlorkohlenstoff getropft wird. Das Öl-CCl₄-Gemisch wird mit gasförmigem Ammoniak gesättigt, wodurch ein Verfestigen der Soltröpfchen beim Absinken in der Säule erzielt wird.

Die DE-A 32 42 293 beschreibt ein Verfahren zur Herstellung von Kügelchen mit einem Durchmesser von 0,01 bis 2 mm. Hierbei werden kleine Soltröpfchen durch Verdüsen eines sauren Aluminiumoxidsols mit einem inerten Gas oder inerten Flüssigkeit erhalten. Die Tröpfchen können entweder in einer Formsäule vom Typ "Kohlenwasserstoff/wässriger Ammoniak" oder in heißer Luft (Sprühtrocknung) zur Koagulation gebracht werden.

Die US-A 4 198 318 beschreibt ein Verfahren, bei dem Aluminiumoxidteilchen mit im wesentlichen sphärischer Gestalt durch Eintropfen von Hydrosolen niedriger Viskosität direkt in eine wässrige Ammoniaklösung hergestellt werden. Das saure Hydrosol wird aus einer Fallhöhe von 0,5 bis 2 cm in die ammoniakalische Phase eingetropft. Um das Eintauchen der Tröpfchen in das Koagulationsmedium zu erleichtern, wird der Ammoniaklösung ein nichtionisches oberflächenaktives Mittel beigemischt. Bei diesem Verfahren, bei dem auf die Verwendung von Kohlenwasserstoffen als formgebende Medien verzichtet wird, ist es offenbar von besonderer Bedeutung, daß die ohnehin sehr kurze Fallstrecke sehr genau optimiert und eingehalten wird, da die Form der Gelkügelchen lediglich über die Eintropfhöhe eingestellt werden kann.

Große Durchsätze werden bei dieser Verfahrensvariante aber nicht erreicht; denn je Düse können höchstens 5 Tropfen je Sekunde erzeugt werden. Außerdem besteht bei so kurzer Fallhöhe immer die Gefahr der Düsenverstopfung durch aufsteigende Ammoniakdämpfe.

Die DE-C 24 59 445 beschreibt ein Verfahren zur Herstellung von untereinander gleichen, kugelfömigen Brennstoffpartikeln durch Umwandlung eines aus einer oder mehreren Düsen fließenden, in Oszillation versetzten Flüssigkeitsstrahles aus Uran- und/oder Thorium enthaltenen Lösungen, in einer Menge von 3000 Tropfen pro Minute, bei dem die Tropfen vor dem Eintauchen in die Ammoniaklösung zuerst eine ammoniakgasfreie Fallstrecke durchlaufen, die so bemessen ist, daß die Tropfen in ihr gerade ihre kugelförmige Gestalt angenommen haben und sofort anschließend zur Stabilisierung dieser kugelförmigen Gestalt eine von Ammoniakgas durchströmte Fallstrecke durchlaufen, wobei das Ammoniakgas so in diese Fallstrecke eingeleitet wird, daß neben einer Tropfenfallrichtung entgegengesetzten Ammoniakgasströmung auch eine horizontale Querströmkomponente des Ammoniakgases durch die Tropfenzwischenräume gewährleistet ist, und diese Fallstrecke so bemessen ist, daß die kugelförmigen Tropfen vor dem Eintauchen in die Ammoniaklösung ausreichend aushärten.

Der Erfindung liegt das Problem zugrunde, Aluminiumoxidformkörper mit optimaler Kugelgestalt und engem Kornspektrum verbunden mit geeigneter Porosität und hoher Bruchfestigkeit sowie geringem Abriebverlust herzustellen.

Das Problem wird erfindungsgemäß dadurch gelöst, daß man die Aluminiumoxidhydrosol-Tröpfchen durch eine mit einer Frequenz von 10 Hz bis 20.000 Hz in Vibration versetzte, mehrere auf einem Ring angeordnete Düsen aufweisende Düsenplatte erzeugt, daß die vom Düsenring vertropfte Tröpfchen vom Ringinneren und - äußeren durch Anblasen mit Ammoniakgas vorverfestigt werden und daß die vorverfestigten Tröpfchen anschließend in einer Ammoniak-Lösung aufgefangen werden.

Für das erfindungsgemäße Verfahren geeignete Aluminiumoxidsole oder Aluminiumoxidsuspensionen können entsprechend dem Stand der Technik z. B. aus Tonerdehydraten wie Böhmit, ultrafeinem Pseudo-Böhmit, Hydrargillit oder Bayerit etc., durch Dispergieren in wässriger Säure, z. B. Salpetersäure, hergestellt werden. Daneben ist es möglich, auf bekannte Weise auch aus metallischem Aluminium durch Einwirkung von verdünnter Säure, z. B. HCl, Aluminiumsole oder Suspensionen zu erhalten, die sich nach dem erfindungsgemäßen Verfahren verarbeiten lassen.

Vorteilhaft für das erfindungsgemäße Verfahren ist die Einhaltung eines engen Viskositätsbereiches. Bei zu hoher Viskosität des Sols/der Suspension ist der Zerfall des Flüssigkeitsstrahles in Tropfen behinderte, was zu einem breiten Kornspektrum führt.

Dagegen können Sole/Suspensionen von zu niedriger Viskosität nicht zu mehrere Millimeter großen Aluminiumoxidkügelchen verarbeitet werden, weil dabei linsen- oder nierenförmige Gebilde entstehen. Die Einstellung des erforderlichen Viskositätsbereiches im Bereich von 10 bis 500 mPa·s, vorzugsweise 50 bis 200 mPa·s bei Raumtemperatur erfolgt z. B. über den Aluminiumoxidgehalt, die Säurekonzentration, die Temperatur oder die Alterungsbedingungen.

Ein Massenprodukt wie Aluminiumoxidkügelchen kann nur bei großem Durchsatz wirtschaftlich hergestellt werden. Deshalb wird das an sich aus der DE-C 24 59 445 bekannte Verfahren der Vibrationsvertropfung angewendet. Zur weiteren Steigerung des Durchsatzes wurde anstelle der bekannten Einstoffdüse eine vibrierende Düsenplatte mit mehreren gleichen Düsen benutzt. Diese Düsenplatte ist wie die bekannte Einstoffdüse mit dem Vorratsgefäß für das Sol/die Suspension über einen Schlauch oder eine Rohrleitung und einen Strömungsmesser verbunden. Bei Einstellung derselben Strömungsbedingungen an jeder Düse dieser Düsenplatte, welche zuvor für die einzelne Einstoffdüse ermittelt worden war, ergab sich nun überraschend an jeder Düse derselbe gleichmäßige Zerfall der Flüssigkeitsstrahlen in uniforme Tropfen, Voraussetzung war jedoch, daß die Viskosität des Sols/der Suspension im angegebenen Bereich lag.

Eine weitere Bedingung mußte erfüllt sein, nämlich, daß der Strömungswiderstand einer jeden Düse der Düsenplatte gleich groß ist. Dies bedeutet gleiche Düsenform, gleiche Bohrlänge und gleicher Düsendurchmesser.

Es wurde gefunden, daß bei präziser Fertigung Düsenplatten mit 10 und mehr Düsen eingesetzt werden können, sofern die mechanische Ankopplung des elektromagnetischen Schwingsystems auf die größere Masse abgestimmt ist. Bei niedrigviskosen Flüssigkeiten konnte sogar eine 101-fache-Düsenplatte mit Erfolg eingesetzt werden. Die Schwingungsfrequenz der Düsenplatte beläuft sich erfindungsgemäß zwischen 10 bis 20000 Hz, vorzugsweise 50 bis 12000 Hz.

Bei der erfindungsgemäß vorgesehenen Ringdüsenanordnung werden die Tröpfchen vom Ringinneren und Ringäußeren her angeblasen. Dabei kann das Anblasen zumindest vom Ringinneren her mit NH₃ erfolgen.

Durch Verwendung von Düsenplatten bietet das Verfahren die Möglichkeit, Aluminiumoxidkugeln bei hohen Durchsätzen ohne Einbußen bei der Reproduzierbarkeit von Korngröße und Kugelform herzustellen.

Das erfindungsgemäße Verfahren hat den Vorteil, daß im Gegensatz zum Stand der Technik auf den Einsatz von organischen Flüssigkeiten als formgebende Mittel oder als Koagulationsmedien gänzlich verzichtet werden kann. Dadurch wird die Belastung von Abluft und Abwasser mit organishen Substanzen sowie die kostspielige Aufarbeitung vermieden.

Das Auffangen von Sol- bzw. Suspensionströpfchen aus Aluminiumoxidhydrat in wässriger Ammoniaklösung, die eine Konzentration von 5 bis 10 Gew.-% aufweisen kann, führt bei größerer Fallstrecke, wie sie bei Anwendung der Vibrationsvertropfung vorkommt, nicht zu kugelförmigen Gelteilchen, sondern zu Flocken etc..

Gemäß der Erfindung können diese Tropfen aber dennoch in Gelkügelchen umgewandelt werden, wenn sie vor dem Eintauchen in die wässrige Lösung mit Ammoniakgas vorverfestigt werden.

Die dabei aufretende elektrische Umladung des Sols an der Tropfenoberfläche reicht aus, um die Kugelform so zu stabilisieren, daß die Teilchen im Fällbad als Gelkügelchen gesammelt werden können. Voraussetzung dafür ist, daß die Tropfen nicht zu groß sind, da sie sonst aufplatzen.

Die Verwendung von Düsenplatten mit 10 und mehr Düsen erschwert den Kontakt der fallenden Tropfen mit Ammoniakgas, insbesondere deshalb, weil von oben viel Luft mit in das Ammoniakgas eingetragen wird, so daß die Tropfen teilweise gar nicht fest werden können. Erfindungsgemäß werden die Tropfen einer jeden Düse der Düsenplatte nach einem bestimmten Fallweg gezielt seitlich mit Ammoniakgas angeblasen. Dadurch wird eine präzise, gleichbleibende und punktförmige Verfestigung der Tropfen erreicht, und es wird verhindert, daß im Bereich der noch flüssigen Tropfen unkontrollierte Turbulenzen auftreten, die zu einem breiten Kornspektrum aufgrund von Tropfenvereinigung führen.

Durch das seitliche Anblasen der Sol-/Suspensionströpfchen mit Ammoniakgas wird somit eine schnelle Vorverfestigung erzielt, woduch die Fallstrecken in der Gasphase verringert werden können. Überraschenderweise ist hierdurch auch die Herstellung von Kügelchen mit Durchmessern von mehr als einem Millimeter Endgröße möglich.

Eine weitere Verbesserung der Kugelform der Gelteilchen kann durch Erzeugung einer bis wenige Zentimeter (vorzugsweise 0,5 - 5 cm) hohen Schaumschicht auf der Ammoniaklösung durch Zusatz eines Tensids und leichtes Einblasen von Luft oder ammoniakhaltiger. Luft erreicht werden. Auch kann eine separate Tensidlösung zur Schaumbildung herangezogen werden.

Bei Verwendung eine Glasfritte zur Erzeugung sehr feiner Gasblasen kann eine sich dauernd erneuernde Schaumschicht von 5 bis 50 mm Höhe, die überraschenderweise zu einer weiteren Formverbesserung der Gelkugeln insbesondere aus großen Soltropfen führte, aufgebaut werden. Damit konnten kugelförmige Gelteilchen von 3,5 mm Durchmesser und mehr erzeugt werden. Diese erfindungsgemäße Erzeugung einer Schaumschicht durch Zusatz eines Tensids zur Ammoniaklösung und Einblasen von Luft unter Verwendung einer feinporigen Fritte ermöglicht die Erweiterung des Komgrößenbereichs der herstellbaren Al₂O₃-Kügelchen bis auf 5 mm Durchmesser. Als besonders wirksam hat sich das Tensid Dodecylsulfat in Form seines Natriumsalzes gezeigt, das z. B. zu 0,2 Vol. % in Ammoniak gelöst wird.

Die erzeugten Gelkügelchen können z. B. in Ammoniaklösung gealtert werden. Anschließend werden die Teilchen ausgetragen und gegebenenfalls z. B. mit Wasser oder verdünnter Ammoniaklösung gewaschen.

Die Trocknung der Partikel erfolgt bei Temperaturen zwischen 20 °C und 300 °C in Zeiten von ca. 1 bis 24 h gegebenenfalls in mehreren Stufen und bei vorgegebenen Wasserdampfdrücken. Dabei tritt in der Regel eine Schrumpfung ein, bei der die Kugeln bis zu 70 % ihres Volumens verlieren können.

Anschließendes Kalzinieren bzw. Aktivieren wird durch eine Temperung bei 500 °C bis 800 °C über vorzugsweise eine Zeitraum von 2 h - 12 h durchgeführt.

Mit dem erfindungsgemäßen Verfahren lassen sich Aluminiumoxidkugeln mit Durchmessern von 50 µm bis 5 mm herstellen. Durch eine mögliche Vorherberechnung der Kugelgröße lassen sich langwierige Optimierungsversuche umgehen und bei der Herstellung wird nur ein sehr geringer Anteil an Über- und Unterkom erzeugt.

Ein wesentlicher Vorteil der erfindungsgemäßen Aluminiumoxidteilchen ist ihre sehr gute Kugelform. Diese wirkt sich vorteilhaft auf das Fließverhalten und ebenfalls auf die Packungseigenschaften aus. Die optimale Sphärizität der Kugeln, gekennzeichnet durch das Fehlen von Deformationen, Aus- und Einbuchtungen sowie von Anwachsungen, gewährleistet eine verbesserte Bruchfestigkeit und ein günstigeres Abriebverhalten, z. B. beim Einsatz in einem Bewegtbett.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus den nachfolgend beschriebenen Beispielen.

### Beispiel 1

5,0 kg Alumiumoxidhydrosol werden hergestellt, indem 1250 g Aluminiumoxidhydrat (Pseudoböhmit, 75 % Al₂O₃, spezifische Oberfläche nach BET 258 m²/g) bei Raumtemperatur unter intensivem Rühren in eine Losung aus 69,0 g Salpetersäure (65 %) und 3681 g Wasser eingebracht und anschließend noch ca. 15 Minuten weitergerührt werden.

Das Sol, daß eine Al₂O₃-Konzentration von 221 g/l, eine Dichte von 1,18 kg/l und Viskosität von 90 mPa s bei Raumtemperatur aufweist, wird danach in ein geschlossenes Vorratsgefäß überführt, wo es durch schwaches Rühren in Bewegung gehalten wird. Mit Hilfe von Druckluft von 0,3 bar wird das Sol aus dem Vorratsgefäß durch einen Schlauch und einen Strömungsmesse`. zu einer vibrierenden Düsenplatte mit 10 ringförmig angeordneten Düsen vom Durchmesser 350 µm gefördert, aus denen dünne Solstrahlen mit konstanter Geschwindigkeit ausfließen und infolge der angelegten periodischen Schwingung uniforme Tropfen bilden. Die Form der 10 Düsen war gleich und entspricht den bekannten Einstoffdüsen. Die Abweichung im Durchmesser ist bei allen 10 Düsen kleiner als ± 10 µm.

Nach einer Fallstrecke von 5 cm Länge in Luft werden die Tropfen in einem Fällgefäß mit Ammoniakgas seitlich angeblasen und dann in Ammoniaklösung aufgefangen. Dabei wandelten sich die flüssigen Tropfen in Al₂O₃-Gelkügelchen um.

Das Anblasen der Tropfen erfolgt an jeder Düse separat aus je einem engen Röhrchen vom Durchmesser 10 mm im Abstand von etwa 1 cm.

Die Fallstrecke in Ammoniakgas ist 5 cm lang. Der Durchfluß des Sols beträgt 140 ml/min und die periodische Schwingung 1200 Hz. Dabei werden an jeder Düse 1200 Tröpfchen pro Sekunde vom Durchmesser 0,7 mm erzeugt. Das entspricht einem Durchsatz voll 1,8 kg Al₂O₃/h.

Die Gelkügelchen werden ca. 1 h in wässriger Ammoniak-Lösung (10%ig) gealtert und anschließend 2 h bei 150 °C getrocknet. Zur Aktivierung werden die getrockneten Teilchen 4 Stunden lang bei 650 °C getempert.

Zum Vergleich wird anstelle der 10-fach-Düsenplatte eine gewöhnliche Einstoffdüse von gleicher Form und gleichem Durchmesser wie die Düsen der Düsenplatte verwendet. Unter sonst gleichen Prozeßparametern werden bei einem Zehntel des Durchflusses, nämlich bei 14 ml/min ebenso große Tropfen bzw. Gelkügelchen erzeugt wie bei Verwendung der 10-Düsenplatte hergestellt wurden.

Nah` der Weiterverarbeitung durch Trocknen und Aktivieren sind die Enddurchmesser der Aluminiumoxidkugeln von derselben Größe, wie die der Kugeln, die mittels der 10 Düsenplatten hergestellt worden sind.

Die physikalischen Eigenschaften der fertigen Aluminiumoxidkugeln sind, wie auch für die nachfolgenden Beispiele, in der Tabelle 1 zusammengestellt.

### Beispiel 2

Das Aluminiumoxidhydrosol wird, wie in Beispiel 1 beschrieben, hergestellt und in das Vorratsgefäß gefüllt. Bei einem Druck von 0,34 bar wird das Sol wie in Beispiel 1 mit Hilfe einer vibrierenden Düsenplatte mit 10 Düsen vom Durchmesser 760 µm in Tropfen umgewandelt.

Die angelegte Schwingungsfrequenz beträgt 500 Hz und der Durchfluß wird auf 450 ml/min eingestellt, dabei bilden sich an jeder Düse pro Minute 30 000 Tropfen vom Durchmesser 1,4 mm. Der Durchsatz beträgt somit 6,0 kg Al₂O₃/h. Nach Umwandlung der Tropfen in Gelkügelchen mit Hilfe von Ammoniak erfolgt die Weiterverarbeitung wie in Beispiel 1 beschrieben.

### Beispiel 3

Das Aluminiumoxidhydrosol wird, wie in Beispiel 1 beschrieben hergestellt und in das Vorratsgefäß gefüllt. Unter Verwendung einer 10-fach-Düsenplatte mit Düsen vom Durchmesser 1,72 mm wird das Hydrosol bei 50 Hz Frequenz und einem Durchfluß von 460 ml/min wie in Beispiel 1 in Tropfen umgewandelt und durch Reaktion mit Ammoniak zu Gelkugeln verarbeitet. Der Durchsatz liegt somit bei 6,1 kg Al₂O₃/h. Zwecks Verbesserung der Kugelform der Gelteilchen, die unmittelbar nach dem Erhärten einen Durchmesser von 3,0 mm haben, wird die Oberflächenspannung der wässrigen Ammoniaklösung durch Zugabe des Tensids Natriumdodecylsulfat in 0,2%iger Konzentration herabgesetzt. Durch leichtes Einblasen von Luft durch eine Glasfritte in die entspannte Ammoniaklösung wird eine Schaumschicht von etwa 10 mm Höhe erzeugt, die sich ständig erneuert und formverbessernd auf die durch Reaktion mit NH₃-Gas vorgehärteten Tropfen wirkt.

Die Gelkügelchen werden in der Ammoniaklösung gesammelt und dann wie in Beispiel 1 beschrieben weiterverarbeitet.

### Beispiel 4

Ein Aluminiumoxidhydrosol, hergestellt wie in Beispiel 1, wird in Tropfen umgewandelt und nach Reaktion mit Ammoniak zu Gelkugeln verarbeitet. Die Düsen der 10-fach-Düsenplatte haben einen Durchmesser von 2,40 mm. Bei einer Frequenz von 50 Hz wird ein Durchfluß von 860 ml/min eingestellt, was einem Durchsatz von 11,4 kg Al₂O₃/h entspricht. Die Ammoniaklösung wird mit 0,2 Vol. % Natriumdodecylsulfat entspannt. Durch leichtes Einblasen von Luft durch eine Glasfritte wird eine Schaumschicht von 10 bis 20 mm Höhe erzeugt. Dadurch wird auch bei diesen großen Gelteilchen von 3,8 mm Durchmesser eine gute Kugelform erzielt. Nach dem Sammeln in der Ammoniaklösung werden die Gelkügelchen wie in Beispiel 1 weiterverarbeitet.

**Tabelle 1**

| Physikalische Eigenschaften der Aluminiumoxidkugeln | | | | |
|---|---|---|---|---|
| Beispiel | 1 | 2 | 3 | 4 |
| Spezifische Oberfläche (m²/g) | 197 | 198 | 195 | 201 |
| Gesamtporenvolumen (ml/g) | 0,46 | 0,47 | 0,45 | 0,47 |
| Bruchfestigkeit (N) | n.b. | 33 | 125 | 142 |
| Schüttdichte (g/l) | 764 | 748 | 752 | 743 |
| Durchmesser (µm) | 394 | 772 | 1685 | 2077 |
| Abweichung vom mittleren Durchmesser (µm) | 11 | 14 | 40 | 22 |
| Standardabweichung (%) | 2,8 | 1,8 | 2,4 | 1,1 |

| Kugelform | | | | |
|---|---|---|---|---|
| Mittelwert von dₘₐₓ/dₘᵢₙ | 1,015 | 1,012 | 1,039 | 1,039 |
| Kugeln mit dₘₐₓ/dₘᵢₙ<1,09 (%) | 99 | 99 | 99 | 99 |
| Durchsatz (kg Al₂O₃/h) | 1,8 | 6,0 | 6,1 | 11,4 |

## Patentansprüche

1. Verfahren zur Herstellung von Aluminiumoxidkugeln, wobei man ein saures Aluminiumoxidsol oder eine saure Aluminiumoxidsuspension einer Viskosität von 10 bis 500 mPa.s herstellt und in Tröpfchen umwandelt, diese in einer wässrigen Ammoniaklösung koaguliert und anschließend die gebildeten Gelkügelchen altert, wäscht, trocknet und kalziniert,
**dadurch gekennzeichnet**,
daß man die Aluminiumoxidhydrosol-Tröpfchen durch eine mit einer Frequenz von 10 Hz bis 20.000 Hz in Vibration versetzte, mehrere auf einem Ring angeordnete Düsen aufweisende Düsenplatte erzeugt, daß die vom Düsenring vertropfte Tröpfchen vom Ringinneren und -äußeren durch Anblasen mit Ammoniakgas vorverfestigt werden und daß die vorverfestigten Tröpfchen anschließend in einer Ammoniak-Lösung aufgefangen werden.

2. Verfahren nach Anspruch 1,
**dadurch gekennzeichnet**,
daß auf der Ammoniak-Lösung zur Ausbildung einer Schaumschicht ein Tensid zugesetzt und in die Ammoniak-Lösung ein Gas eingeblasen wird und/oder eine separate Tensidlösung zur Schaumerzeugung benutzt wird.

3. Verfahren nach Anspruch 1,
**dadurch gekennzeichnet**,
daß die Schaumschicht eine Höhe im Bereich von 5 bis 50 mm aufweist.

4. Verfahren nach Anspruch 1,
**dadurch gekennzeichnet**,
daß die Gelkügelchen bei Temperaturen zwischen 20 °C und 300 °C über einen Zeitraum von 1 bis 24 h getrocknet werden.

5. Verfahren nach Anspruch 1,
**dadurch gekennzeichnet**,
daß das Anblasen der Tröpfchen vom Ringinneren mit NH₃ erfolgt.

6. Verfahren nach zumindest einem der vorhergehenden Ansprüche,
**dadurch gekennzeichnet**,
daß die getrockneten Kügelchen 2 h bis 12 h bei Temperaturen von 500 °C bis 700 °C kalziniert bzw. aktiviert werden.

## Claims

1. A process for producing aluminium oxide beads, in which an acid aluminium oxide sol or an acid aluminium oxide suspension having a viscosity of 10 to 500 mPa·s is produced and converted into droplets, said droplets are coagulated in an aqueous ammonia solution, and the gel beads thereby formed are aged, washed, dried and calcined,
**wherein**
said aluminium oxide hydrosol droplets are generated by a nozzle plate vibrated with a frequency of 10 Hz to 20000 Hz and having several nozzles disposed on a ring and wherein said droplets coming from the nozzle ring are pre-solidified by blowing ammonia gas from the ring interior and from the ring exterior against the droplets, and in that said pre-solidified droplets are then collected in an ammonia solution.

2. A process according to Claim 1,
**wherein**
a tenside is added to said ammonia solution for formation of a foam layer, and a gas is blown in and/or a separate tenside solution is used for foam generation.

3. A process according to Claim 1,
**wherein**
said foam layer has a depth in the range from 5 to 50 mm.

4. A process according to Claim 1,
**wherein**
said gel beads are dried at temperatures between 20° C and 300° C over a period of 1 to 24 hours.

5. A process according to Claim 1,
**wherein**
said droplets are blown from the ring interior with NH₃.

6. A process according to at least one of the preceding claims,
**wherein**
said dried beads are calcined or activated for 2 h to 12 h at temperatures from 500° C to 700° C.

## Revendications

1. Procédé de production de billes d'oxyde d'aluminium dans lequel on prépare un sol acide d'oxyde d'aluminium ou une suspension acide d'oxyde d'aluminium d'une viscosité de 10 à 500 mPa.s et on le transforme en gouttelettes, on coagule celles-ci dans une solution aqueuse d'ammoniaque et on vieillit les billes de gel ainsi formées, on les lave, on les sèche et on les calcine, caractérisé en ce que l'on produit les gouttelettes d'hydrocol d'oxyde d'aluminium au moyen d'une plaque à filières présentant plusieurs filières disposés sur un anneau et mises en vibration à une fréquence de 10 Hz à 20.000 Hz, en ce que les gouttelettes s'égouttant de l'anneau des filières sont préconsolidées par soufflage d'ammoniac gazeux de l'intérieur et de l'extérieur de l'anneau et en ce que les gouttelettes préconsolidées sont reprises ensuite dans une solution d'ammoniaque.

2. Procédé selon la revendication 1,
caractérisé en ce qu'un agent tensioactif est ajouté à la solution d'ammoniaque pour former une couche de mousse et en ce qu'un gaz est insufflé dans la solution d'ammoniaque et/ou en ce qu'une solution séparée d'agent tensioactif est utilisée pour créer la mousse.

3. Procédé selon la revendication 1,
caractérisé en ce que la couche de mousse a une hauteur de l'ordre de 5 à 50 mm.

4. Procédé selon la revendication 1,
caractérisé en ce que les billes de gel sont séchées à des températures comprises entre 20°C et 300°C pendant une durée de 1 à 24 heures.

5. Procédé selon la revendication 1,
caractérisé en ce que le soufflage des gouttelettes est réalisé depuis l'intérieur de l'anneau au moyen de NH₃.

6. Procédé selon au moins l'une des revendications précédentes, caractérisé en ce que les billes séchées sont calcinées ou activées pendant 2 à 12 heures à des températures de 500°C à 700°C.
